# EUROPEAN PATENT APPLICATION

(11) **EP 1 489 541 A1**
(43) Date of publication of application: **22.12.2004**
(21) Application number: 03710423.9
(22) Date of filing: 19.03.2003
(51) Int. Cl.: G06F 17/60

(54) **MOBILE SETTLEMENT SYSTEM AND DEVICE**

(30) Priority: 20.03.2002 JP 2002079382
(71) Applicant: MATSUSHITA ELECTRIC INDUSTRIAL CO., LTD., Kadoma-shi, Osaka 571-8501 (JP)
(72) Inventor: TAKAYAMA, Hisashi, Setagaya-ku, Tokyo 156-0043 (JP)
(74) Representative: Betten & Resch
(86) International application number: PCT/JP2003/003299
(87) International publication number: WO 2003/079256

(57) **Abstract**

The present invention relates to a mobile settlement system for performing settlement by a mobile terminal, which improves efficiency and convenience of self-service service apparatuses. A mobile communication device performs, via a network, settlement for the service received from a service providing apparatus having no network communication function. The mobile communication device receives, via the network, control information of a management server causing the service providing apparatus to execute the service and transmit the same to the service providing apparatus. Therefore, there is no need to insert money into the service providing apparatus nor need to collect such money. The service providing apparatus need not have a bill or coin detector, thereby reducing its manufacturing cost. The management server can control the service providing apparatus and keep up on with the use conditions of service providing apparatuses in real time without establishing a network between the management server and the service providing apparatuses.

## Description

### BACKGROUND OF THE INVENTION

### Field of the Invention

The present invention relates to a mobile settlement system and to an apparatus which implements said system, wherein a settlement is carried out by using a mobile terminal such as a mobile phone with respect to the services provided by self-service apparatuses such as automatic vending machines, coin-operated parking lots, parking meters, and coin-operated lockers. In particular, the present invention enables implementation of settlement by using a mobile terminal, and control of a self-service apparatus via a mobile terminal.

### Description of the Related Art

In recent years, there has been a widespread use of systems which provide services by using self-service apparatuses such as automatic vending machines, coin-operated parking lots, parking meters, and coin-operated lockers. A user only has to put coins into the automatic vending machine, and select a desirable product by pressing the selection button. Additionally, by inserting coins into the parking meter, the use is able to park a vehicle for a predetermined amount of time. Additionally, by placing baggage into the coin-operated locker and putting coins therein, the use is able to lock the coin-operated locker for storage. The user keeps the key used for locking the coin-operated locker, and uses the key to unlock it when removing the baggage from the coin-operated locker.

The coins accumulated in these self-service apparatuses are collected during rounds made by employees of the service provider.

Moreover, in recent years, a coin-operated locker system, in which a mobile phone is used in place of a key, has been devised. In this system, when a user of a coin-operated locker calls from a mobile phone to the specified telephone number assigned with respect to each installation site of the coin-operated locker, a connection between the mobile phone and this system is carried out, and then the number of available coin-operated lockers is indicated on the display of the mobile phone. When baggage is put into the specified coin-operated locker, and the appropriate number of coins has been inserted, the telephone number of the mobile phone is stored in the memory installed in the coin-operated locker, and the coin-operated locker is locked thereafter. Later, when mobile phone of the same telephone number calls the telephone number of the coin locker, the coin-operated locker unlocks.

However, there are deficiencies described hereinafter in the services provided by self-service apparatuses.

Parking meters, coin-operated lockers cannot be used without coins. Although many automatic vending machines have mechanisms to receive bills and make change, the mechanism thereof requires more sophistication, thereby increasing the manufacturing cost.

Moreover, there is a need for collecting coins and bills put into the self-service apparatuses, requiring many workers, which in the end increases costs.

Moreover, criminal cases are on the rise, in which forged coins are used or self-service apparatuses are destroyed for the purpose of stealing coins and cash contained therein.

Moreover, in the case of a coin-operated locker, there may be a situation in which a user loses the key of the coin-operated locker in use. In this case, since it is necessary to change the locks, the operating cost increases. Moreover, until the lock is changed, the coin-operated locker cannot be used, thereby affecting the operation rate of the machine.

In a coin-operated locker system, in which a mobile phone is used in place of a key, there has to be a connection to a network with respect to each installation site of the coin-operated locker, and an assignment of a telephone number with respect to each installation site. Therefore, a management company of coin-operated lockers is required to make contracts with a telephone company according to the number of installation sites, thereby increasing costs.

### SUMMARY OF THE INVENTION

It is an objective of the present invention to provide a mobile settlement system, and the apparatus thereof implementing said system, which performs settlement by a mobile terminal, which improves efficiency and convenience in providing services via self-service apparatuses.

In the mobile settlement system of the present invention, a mobile communication device performs, via a network, settlement of the service received from the service providing apparatus having no network communication function. The mobile communication device receives, via the network, control information of a management server for executing said service by the service providing apparatus and transmits said information to the service providing apparatus.

In another aspect of the present invention, a mobile communication device comprises a storage means for storing an electronic value card, a first communication means for performing wireless communication via a network, and a second communication means for performing wireless communication via a local wireless communication, wherein the device receives contract information of the service provided by the service providing apparatus via said second communication means, performs the settlement process for receiving said service via the first communication means, receives control information for executing said service on the service providing apparatus, and transmits said control information to said service providing apparatus via said second communication means.

In another aspect of the present invention, an electronic value card stores a device private key and the corresponding device public key in the tamper-resistant memory area; stores identification information for identifying a credit card, and a credit card certificate for certifying said device public key in the non-tamper-resistant area; carries out digital signature to the received contract information by using said device private key; and outputs the contract information with said credit card certificate.

In another aspect of the present invention, an electronic value card stores a device private key and the corresponding device public key in the tamper-resistant memory area, stores received control information in the non-tamper-resistant area, and implements a digital signature by using said device private key.

In another aspect of the present invention, a management server, which manages a service providing apparatus, transmits control information for executing said service on said service providing apparatus to a mobile communication device, which receives a service provided by said service providing apparatus, via a network.

In another aspect of the present invention, a service providing apparatus, which is managed by a management server, comprises a local wireless communication means, a mechanism for executing a service, and a control means for controlling operation of said service providing apparatus. In the configuration of the service providing apparatus, said control means controls said mechanism according to said control information when receiving control information of said management server from a mobile communication device requesting said service via said local wireless communication means.

According to the present invention, a settlement process of a service becomes available via a network, which is executed by a service providing apparatus having no network communication functions. Moreover, it is possible to send a mobile control instruction from a server to this service providing apparatus via a user's mobile phone, and to control the service providing apparatus thereby.

Therefore, there is no need to put money into the service providing apparatus nor need to collect such money. A service providing apparatus need not have a bill or coin detection mechanism, thereby reducing the manufacturing cost.

Moreover, the management server can control the service providing apparatus without establishing a network connection between the management server and the service providing apparatus and keep up with the conditions of the service providing apparatus in real time.

### BRIEF DESCRIPTION OF THE DRAWINGS

Fig. 1 is a block diagram of a mobile settlement system of the first embodiment according to the present invention.
Fig. 2 is an illustration of an electronic value card of the first embodiment according to the present invention.
Fig. 3 is an illustration of a data structure of a certification of a credit card of the first embodiment according to the present invention.
Fig. 4 is a block diagram of a mobile phone of the first embodiment according to the present invention.
Fig. 5 is an illustration of a data structure of service information of the first embodiment according to the present invention.
Fig. 6 is a block diagram of a mobile settlement system involving a payment agency by an operator of the second embodiment according to the present invention.
Fig. 7 is a block diagram of a mobile settlement system involving a payment agent of the second embodiment according to the present invention.
Fig. 8 is a block diagram of a parking meter system of the third embodiment according to the present invention.
Fig. 9 is a block diagram of a coin-operated parking lot system of the fourth embodiment according to the present invention.
Fig. 10 is a block diagram of an automatic vending machine of the fifth embodiment according to the present invention.
Fig. 11 is a block diagram of a coin-operated locker system of the sixth embodiment according to the present invention.
Fig. 12 is an illustration of an electronic value card of the sixth embodiment according to the present invention.
Fig. 13 is a block diagram of a coin-operated locker system of the seventh embodiment according to the present invention.
Fig. 14 is a block diagram of a data structure of a digital key of the seventh embodiment according to the present invention.
Fig. 15 is an illustration of an electronic value card of the seventh embodiment according to the present invention.
Fig. 16 is a block diagram of a coin-operated locker system involving a payment agency by an operator of the eighth embodiment according to the present invention.
Fig. 17 is an illustration of an electronic value card of the eighth embodiment according to the present invention.
Fig. 18 is a block diagram of a coin-operated locker system involving a payment agent of the eighth embodiment according to the present invention.

### DETAILED DESCRIPTION OF THE PREFERRED EMBODIMENTS

In the settlement system of the present invention, by using a mobile phone, a user settles the charge for the fee-based service provided by a self-service apparatus (a service providing apparatus). The other party to the settlement is a management server of an operator of a service providing apparatus or its agent. Then, the management server dynamically generates control instructions for the service providing apparatus (mobile control instruction). The mobile control instructions are transmitted to the service providing apparatus via the mobile phone, and the service providing apparatus starts providing services to the user.

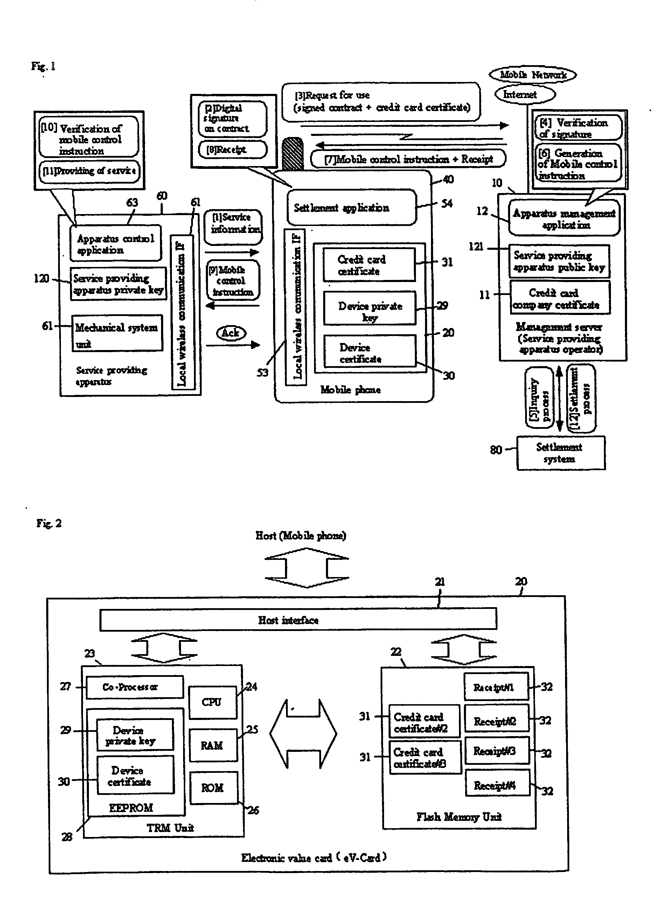

Fig. 1 is a block diagram of a mobile settlement system of the first embodiment according to the present invention. Here, the case of credit settlement will be described.

The above system comprises a service providing apparatus 60, which is a self-service apparatus; a mobile phone 40 owned by a user; a management server 10 of a management operator of a service providing apparatus; and a settlement system 80, which performs settlement via a network.

In the mobile phone 40, an electronic value card (eV-card) 20 such as an IC card used for electronic commerce is installed therein.

As shown in Fig. 2, the above electronic value card (eV-card) 20 comprises a flash memory unit 22, which stores the credit card certificate 31 and the receipt 32 of electronic commerce; a TRM (tamper-resistant module) unit 23, and a host interface 21 for a mobile phone (host). The TRM unit 23 comprises a CPU 24, which controls the operation of the above card; a RAM 25, which is used as a work area by the CPU 24; a ROM 26, which stores the program regulating the operation of the CPU 24; a coprocessor 27, which performs computations such as encryption delegated by the CPU 24; a device private key 29; and an EEPROM 28, which stores the device certificate 30.

The device private key 29 is a private key in the public key cryptosystem, which is created for the above electronic value card 20 (eV-card). The device certificate 30 is a certificate, by which the manufacturer of the above electronic value card 20 certifies the information of the device public key corresponding to the device private key 29.

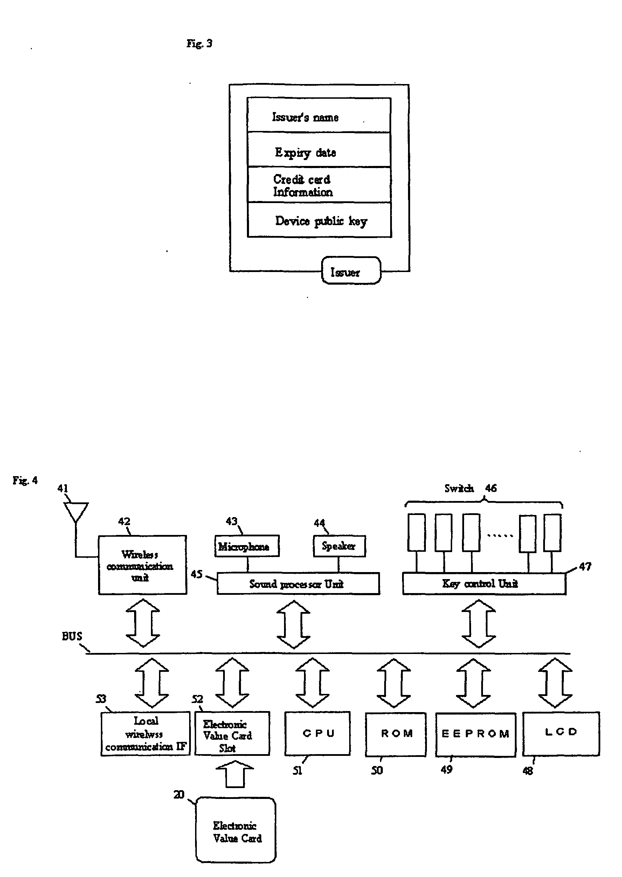

Moreover, the credit card certificate 31 is a certificate, by which a credit card company certifies the credit card corresponding to the above electronic value card 20. As shown in Fig. 3, the credit card certificate 31 contains the issuer's name of the credit card certificate, the expiration date of the credit card certificate, credit card information such as the card number, the expiration date and the name of the owner of the credit card, the device public key corresponding to the device private key 29, etc. The digital signature is given by using a private key of a credit card company.

There may be more than one credit card certificate 31, and in that case, a user selects a credit card used for settlement.

As shown in Fig. 4, a mobile phone 40 comprises an electronic value card slot 52, to which the electronic value card 20 is attached; a local wireless communication interface (I/F) 53, which performs communication with the service providing apparatus 60; a wireless communication unit 42, which communicates with the management server 10 via an antenna 41; a CPU 51, which controls the operation of the mobile phone 40; a ROM 50, which stores the basic program regulating the operation of the CPU 51; an EEPROM 49, storing an application for a mobile settlement system executed by the CPU 51 (a settlement application 54); a liquid crystal display (LCD) 48; a sound processor unit 45 of a microphone 43 and a speaker 44; and a key control unit 47 of a switch 46.

The service providing apparatus 60 includes a local wireless communication interface (I/F) 61, which performs communication with a mobile phone 40; a mechanical system unit 62 for providing services; an apparatus control application 63 for a device control, which regulates the operation of the service providing apparatus 60; and a microcomputer. Moreover, the service providing apparatus 60 comprises a control unit (not described in the drawings), which controls the service providing apparatus 60 based on the apparatus control application 63 for the device control; and a private key 120 of a service providing apparatus 60.

Between the service providing apparatus 60 and the mobile phone 40, communication such as infrared data communication or Bluetooth is performed via the local wireless communication I/F (53, 61). Moreover, communication by using a non-contact IC card may be used.

The management server 10 is a server system of computers, which comprises a certificate 11 of a credit card company for verification of a digital signature of a credit card company, which has been attached to the credit card certificate 31; a public key 121 for a service providing apparatus for verification of a digital signature from the service providing apparatus; and an apparatus management application 12 regulating the operation of the management server 10. The public key 121 for the service providing apparatus is managed with respect to each service providing apparatus according to the service providing apparatus number managed by the management server 10.

Hereinafter, the operation of the above system will be described with the use of Fig. 1.

When the service providing apparatus 60 detects a user wishing to receive a service or the operation for requesting a service by a user, the service providing apparatus 60 generates service information and transmits the same from the local wireless communication I/F ([1]).

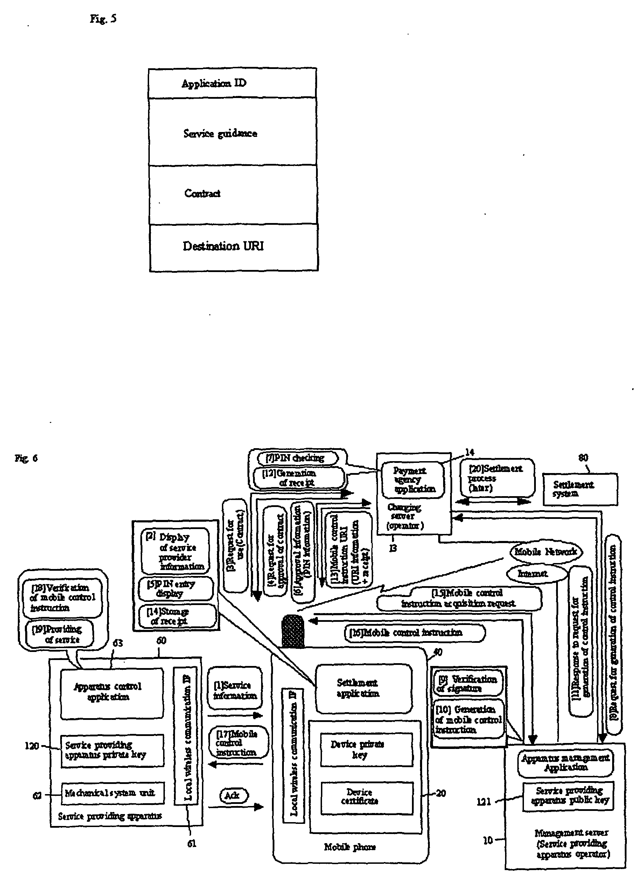

As shown in Fig. 5, the above service information contains the following information in XML: identification information (application ID) indicating the type of applications, information (service guidance) regarding the content of the service provided by the service providing apparatus 60, contract information (contract) regarding the content of the service and the payment of a fee, and the URI (Uniform Resource Identifier) indicating the site to which the request message for use is transmitted. The contract information includes the service providing apparatus number, uniquely identifying the service providing apparatus, the contract number, the information relating to the content of the service so provided, and the payment information. The digital signature from the private key 120 of a service providing apparatus is attached to the service information. A unique number is assigned to the contract number as per each generation of the service information.

A mobile phone 40, having received the above service information via the local wireless communication I/F, activates the settlement application 54 based on the application ID indicated by the service information, displays the content of the service guidance and the contract on an LCD, and urges an user to carry out the payment operation (a digital signature on the contract). When the user carries out the payment operation, the settlement application 54 executes the digital signature on the contract ([2]).

The above digital signature is carried out by using the device private key 29 of an electronic value card 20. However, the device private key 29 stored in the EEPROM 28 in the TRM unit 23 of the electronic value card 20 cannot be read outside the TRM 23. As such, in respect to the command for the signature operation from the CPU 51, the CPU 24 sets the followings to the coprocessor 27: the device private key 29 specified by the command for the signature operation, and the data of the object of the signature operation. The coprocessor uses them to execute the operation for the digital signature, and the operation result thereof is returned to the CPU 51.

The mobile phone 40 transmits a request message for use, which includes a contract with a signature, and the credit card certificate 31, from the wireless communication unit 42 to the management server 10, which is a destination indicated by the destination URI ([3]).

The above request message for use is sent to the management server 10 via a mobile communication or the internet. The apparatus management application 12 of the management server 10 at first searches for the public key of a service providing apparatus based on the service providing apparatus number of the contract, and verifies the digital signature on the contract given by the service providing apparatus by using the above retrieved public key of the service providing apparatus. Next, it verifies the digital signature on the contract by using the device public key included in the credit card certificate 31 and verifies the digital signature of a credit card company attached to the credit card certificate 31 by using the public key of the credit card company included in the credit card company certificate 11 ([4]).

In cases where all of the results of the above verifications are in the affirmative, a credit inquiry to the settlement system 80 is completed ([5]). Subsequently, a mobile control instruction, which is control information sent to the service providing apparatus 60, is generated based on the content of the contract. The mobile control instruction described above contains information relating to the service providing apparatus number and the contract number ([6]).

The management server 10 encrypts the above mobile control instruction, generates a receipt, and transmits the mobile control instruction and the receipt to the mobile phone 40 ([7]).

The mobile phone 40 stores the receipt into the flash memory unit 22 of the electronic value card 20 when the mobile control instruction and the receipt are received ([8]), and transmits the mobile control instruction from the local wireless communication I/F 53 to the service providing apparatus 60 ([9]). The apparatus control application 63 of the service providing apparatus 60 decrypts the mobile control instruction, respectively checks the service providing apparatus number and the contract number of the mobile control instruction with the service providing apparatus number of the service providing apparatus 60 and the contract number of the contract in the service information, and verifies the mobile control instruction ([10]). In cases where the verification result is the affirmative, "Ack" is returned to the mobile phone 40, and the service is provided by the mechanical system unit 62, which is controlled by the mobile control instruction ([11]). Later, the management server 10 executes the settlement process with the settlement system 80 ([12]).

Thus, according to the system herein, the charge for the fee-based service provided by the service providing apparatus 60 is settled by using a mobile phone 40, so that the operator of such service providing apparatus need not collect money from the service providing apparatus 60.

Moreover, the service providing apparatus 60 need not have a detector for coins and bills, thereby reducing its manufacturing cost. Moreover, the management server 10 can keep up with the conditions of the service providing apparatus 60 in real time.

Moreover, since the management server 10 can control the respective service providing apparatus without establishing a network, the service providing apparatus 60 does not need to have a remote communication function.

Therefore, the system herein can be widely used in systems for automatically providing fee-based services by using self-service apparatuses such as, but not limited to, automatic vending machines, parking meter systems, coin-operated parking lots, and coin-operated locker systems.

Note that the communication between the mobile phone 40 and the management server 10 may be carried out in a secure session established by SSL (secure socket layer). In this case, it is possible to improve security against interception, etc.

Moreover, the apparatus control application 63 of the service providing apparatus 60 may verify the valid time period, the information of which is included in the mobile control instruction generated by the management server 10. In this case, it is possible to improve security against fraud, e.g., the mobile control instruction, which has been used, is fraudulently reused.

Moreover, the apparatus control application 63 of the service providing apparatus 60 may verify the digital signature of the management server 10, which has been attached to the mobile control instruction generated by the management server 10. In this case, it is possible to improve security against fraud such as forgery of the mobile control instruction.

Moreover, the settlement application 54 may transmit the contract with the card number and the expiration date of a credit card, which has been inputted by a user, without executing a digital signature to the contract. In this case, the management server 10 carries out a credit inquiry and a settlement process with the settlement server 80. Since the user authentication by signature verification is not executed, it is less secure. However, since there is no need for the digital signature function in the mobile phone 40, system installation is somewhat easier.

In the second embodiment of the present invention, a settlement system involving a payment agency instead of credit settlement of the first embodiment will be described.

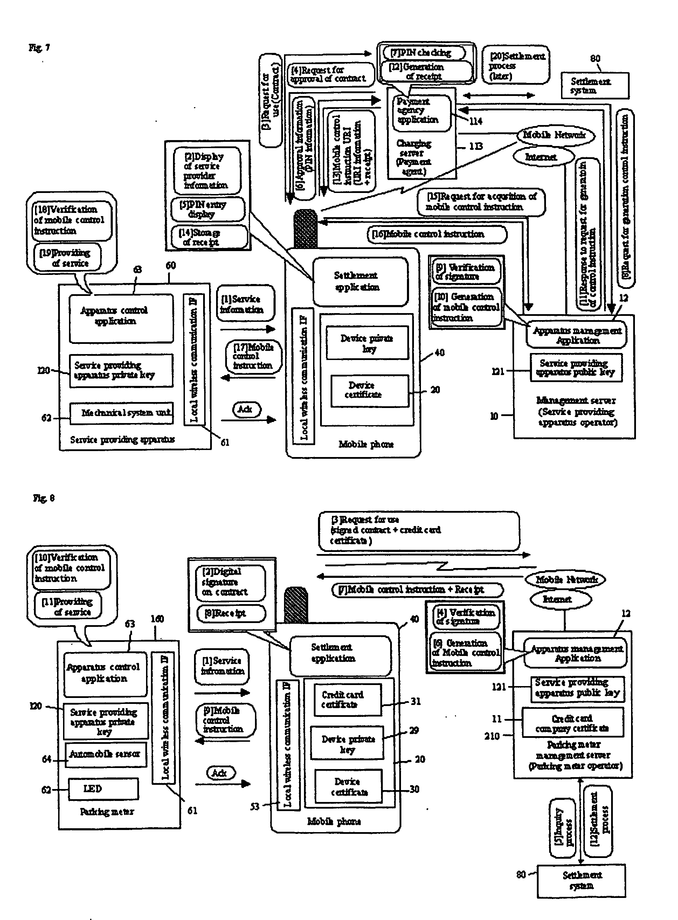

Fig. 6 is a block diagram of a mobile settlement system involving a payment agency by a charging server 13 operated by an operator of mobile phone. The charging server 13 comprises a payment agency application 14. The settlement system 80 carried out settlement processes with the charging server 13. Moreover, the electronic value card 20 stored in the mobile phone 40 may not store the credit card certificate. The other configurations and the operations of the service providing apparatus 60 are not different from those of the first embodiment according to the present invention (Fig.1).

In the charging server 13 operated by an operator, a PIN (Personal Identification Number) corresponding to the terminal number of a mobile phone 40 is pre-registered.

The operation of the above system will be described hereinafter.

When the service providing apparatus 60 detects the user wishing to receive a service or the operation requesting for a service by a user, the service providing apparatus 60 transmits the service information to the mobile phone 40, wherein said service information designates the URI of the charging server 13 as a designation URI ([1]).

The mobile phone 40, having received the above service information via the local wireless communication I/F, activates the settlement application 54 based on the application ID indicated by the service information, displays the content of the service guidance and the contract on LCD, and urges the user to carry out the confirmation operation of the request for use ([2]). When the user carries out the confirmation operation, the settlement application 54 transmits a request message for use including the contract from the wireless communication unit 42 to the charging server 13, which is a destination indicated by the destination URI ([3]).

The payment agency application 14 of the charging server 13 transmits the request for the approval of the contract, which confirms the user's contractual intent by way of user authentication ([4]). The settlement application 54 of the mobile phone 40, having received the request for the approval of the contract, displays the PIN-entry display and urges the user to input a PIN ([5]). When the user inputs the PIN, the settlement application 54 of the mobile phone 40 transmits the PIN information as approval information to the charging server 13 ([6]). The payment agency application 14 of the charging server 13 checks the PIN with the PIN registered corresponding to the terminal number of the mobile phone 40 ([7]), and if they are identical, a request for generating a control instruction for requesting generation of a mobile control instruction is transmitted to the management server 10 ([8]). The request for generating a control instruction includes a contract, which the charging server 13 has received as a request message for use via the mobile phone 40. The apparatus management application 12 of the management server 10 searches for the public key of a service providing apparatus based on the service providing apparatus number of the contract, and verifies the digital signature on the contract from the service providing apparatus by using the retrieved public key of the service providing apparatus ([9]). In cases where the result of the above verification is in the affirmative, the apparatus management application 12 of the management server 10 generates a mobile control instruction, which is a control instruction to the service providing apparatus 60, based on the content of the contract, and assigns a unique URI thereto ([10]). Then, a response message for requesting generation of a control instruction, which includes the URI information of the mobile control instruction so generated, is transmitted to the charging server. Moreover, in cases where an error is detected in the verification of the digital signature of the contract, a response message for requesting generation of a control instruction, which indicates the error, is transmitted to the charging server ([11]).

The charging server 13, having received the response message for requesting generation of a control instruction including the URI information of the mobile control instruction, generates a receipt as payment history information for the user based on the content of the contract ([12]), and transmits it with the URI information of the mobile control instruction as a URI message of a mobile control instruction to the mobile phone 40 ([13]). The settlement application 54 of the mobile phone 40, having received the above information, stores the receipt into the flash memory unit 22 of the electronic value card 20 ([14]), transmits the acquisition request for the request for a mobile control instructions the mobile control instruction, which is indicated by the URI information of the mobile control instruction to the management server 10 ([15]). The management server 10 transmits the mobile control instruction to the mobile phone 40 ([16]).

Next, the mobile phone 40 transmits the mobile control instruction so received to the service providing apparatus 60 ([17]). The apparatus control application 63 of the service providing apparatus 60 decrypts the mobile control instruction, respectively checks the service providing apparatus number and the contract number of the mobile control instruction with the service providing apparatus number and the contract number, which have been included in the contract, and verifies the mobile control instruction ([18]). In cases where the verification result is in the affirmative, "Ack" is returned to the mobile phone 40, and the service is provided by controlling the mechanical system unit 62 based on the mobile control instruction ([19]). Later, the charging server 13 executes the settlement process with the settlement system 80 ([20]).

As described hereinabove, according to the system herein, an operator authenticates a user by using a terminal number and PIN, and collects the charge for the service of a service providing apparatus 60 with the communication charge of the mobile phone. Moreover, the management server 10 receives the result of authentication, and transmits the service control instruction of the service providing apparatus 60 back to the user.

Moreover, Fig. 7 is a block diagram of a mobile settlement system involving a payment agency by means of a charging server 113 of a payment agent. A PIN, corresponding to the member's ID, is pre-registered in the charging server 113. In this case, the settlement application 54 of the mobile phone 40, having received the request for the approval of the contract, urges the user to input the member's ID and PIN. When the user inputs the member's ID and the PIN, the settlement application 54 of the mobile phone 40 transmits the member's ID and the PIN as the approval information to the charging server 113. The payment agency application 114 of the charging server 113 authenticates the user by using the member's ID and the PIN. The other configurations are the same as those of Fig. 6.

As descried hereinabove, according to the system herein, the payment agent authenticates the user by using member's ID and PIN, and collects the charge for the service of the service providing apparatus 60. Moreover, the management server 10 receives the result of authentication, and transmits the service control instruction of the service providing apparatus 60 to the user.

According to the system illustrated in Fig. 6 and 7 as described in the first embodiment according to the present invention, the management server 10 can control respective service providing apparatuses without establishing a network, so that the service providing apparatus 60 does not need to have a remote communication function.

Therefore, the system herein can be widely used in systems for automatically providing fee-based services by using self-service apparatuses such as, but not limited to, automatic vending machines, parking meter systems, coin-operated parking lots, coin-operated locker systems, etc.

Note that the communication between the mobile phone 40 and the charging server 13 (or 113), and the communication between the mobile phone 40 and the management server 10 may be performed in a secure session established by SSL (secure socket layer). In this case, security against interception, etc. is improved.

Moreover, the apparatus control application 63 of the service providing apparatus 60 may verify the valid time period, the information of which is included in the mobile control instruction generated by the management server 10. In this case, it is possible to improve security against fraud, e.g., a mobile control instruction, which has been used, is fraudulently reused.

Moreover, the apparatus control application 63 of the service providing apparatus 60 may verify the digital signature of the management server 10, which has been attached to the mobile control instruction generated by the management server 10. In this case, it is possible to improve security against fraud such as forgery of the mobile control instruction.

In the third embodiment according to the present invention, a parking meter system implemented by the present invention will be described.

The system herein comprises a parking meter 160 as a service providing apparatus, as shown in Fig. 8. This parking meter 160 comprises a local wireless communication I/F 61; a apparatus control application 63; a control unit (not described in the drawings) of a microcomputer, which controls the parking meter 160 based on the apparatus control application 63; a private key 120 of a service providing apparatus, which is the private key of the parking meter 160; an automobile sensor 64 as a mechanical system unit, which detects automobiles; and a LED 65 for display. Moreover, the system further comprises, as a management server, a management server 110 of a parking meter operator. The other configurations are not different from those of the first embodiment according to the present invention (Fig. 1).

When the automobile sensor 64 detects an automobile, the parking meter 160 of the system herein displays the non-paid status on the LED 65, and starts continuous transmission of the service information ([1]).

The mobile phone 40 executes the request for use in the same way as the first embodiment, receives the mobile control instruction from the parking meter management server 110, and transmits the mobile control instruction to the parking meter 160 ([9]). The mobile control instruction is set with the time period of use, corresponding to the time period (e.g. 300 yen for 1 hour), during which the parking meter 160 becomes available for use by way of payment of the charge indicated on the contract of the service information.

The apparatus control application 63 of the parking meter 160 decrypts the mobile control instruction, respectively checks the service providing apparatus number and the contract number of the mobile control instruction with the service providing apparatus number of the parking meter 160 and the contract number of the contract in the service information, and then verifies the mobile control instruction. In cases where the verification result is in the affirmative, "Ack" is returned to the mobile phone 40,and the paid-in-full status is indicated on the LED 65 based on the mobile control instruction during the time period of use.

In this parking meter system, electronic settlement is used, so that there is no need for collecting coins. Moreover, there is no need of a coin detector, thereby reducing its manufacturing cost. Moreover, a parking meter operator can keep up with the conditions of service providing apparatuses in real time. Moreover, the parking meter management server can control the respective service providing apparatus having no remote communication function. Moreover, by setting the apparatus control application 63 to change the content of the contract in the service information according to the date, the parking meter system enables flexible management, e.g., changing the charge for use of the parking meter 160 according to the date.

Note that also in the system herein, as in the second embodiment, a payment agency by an operator or an agent may be used.

In the fourth embodiment according to the present invention, a coin-operated parking lot system implemented by the present invention will be described.

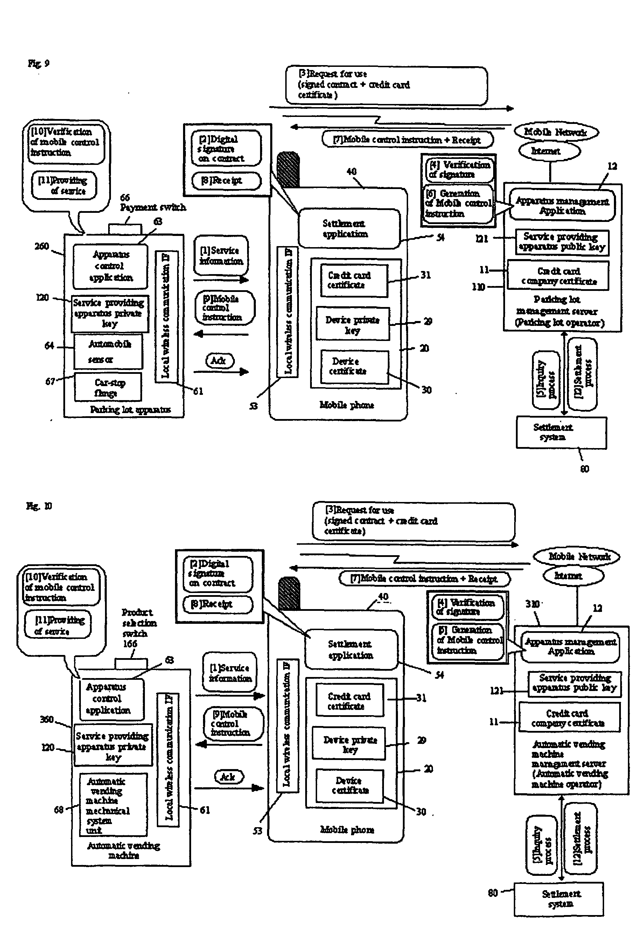

The system herein comprises a parking lot apparatus 260 as a service providing apparatus, as shown in Fig. 9. The parking lot apparatus 260 comprises a local wireless communication I/F 61; an apparatus control application 63, a control unit (not described in the drawings) of a microcomputer, which controls the parking lot apparatus 260 based on the apparatus control application 63; a private key 120 of a service providing apparatus 260; an automobile sensor 64 as a mechanical system unit, which detects automobiles; a car-stop flange 67, which is raised in order to stop cars from exiting; a payment switch 66, which activates a mobile settlement process when it is on. Moreover, the system further comprises, as a management server, a parking-lot management server 210 of a parking lot operator. The other configurations are not different from those of the first embodiment according to the present invention (Fig. 1).

In the parking lot apparatus 260 of the coin-operated parking lot system, in cases where the automobile sensor detects a car, the car-stop flange 67 is raised. At the point of a user leaving from the parking lot, upon turning on the payment switch, the system starts continuous transmission of service information ([1]).

The mobile phone 40 executes the request for use in the same manner as that of the first embodiment, receives the mobile control instruction from the parking-lot management server 210 and transmits it to the parking lot apparatus 260 ([9]).

The apparatus control application 63 of the parking lot apparatus 260 decrypts the mobile control instruction, respectively checks the service providing apparatus number and the contract number of the mobile control instruction with the service providing apparatus number of the parking lot apparatus 260 and the contract number of the contract in the service information, and verifies the mobile control instruction. In cases where the verification result is in the affirmative, "Ack" is returned to the mobile phone 40, and the car-stop flange 67 is lowered according to the mobile control instruction.

In the coin-operated parking lot system, electronic settlement is used, so that there is no need to collect coins. Moreover, there is no need of a coin or bill detector in the parking lot apparatus, thereby reducing its manufacturing cost. Moreover, a parking lot operator can keep up with the conditions of parking lot apparatuses in real time. Moreover, the parking lot management server can control the parking lot apparatus having no remote communication function.

Note that also in the system herein, as in the second embodiment, a payment agency by an operator or an agent may be used.

In the fifth embodiment according to the present invention, a coin-operated vending machine system implemented by the present invention will be described.

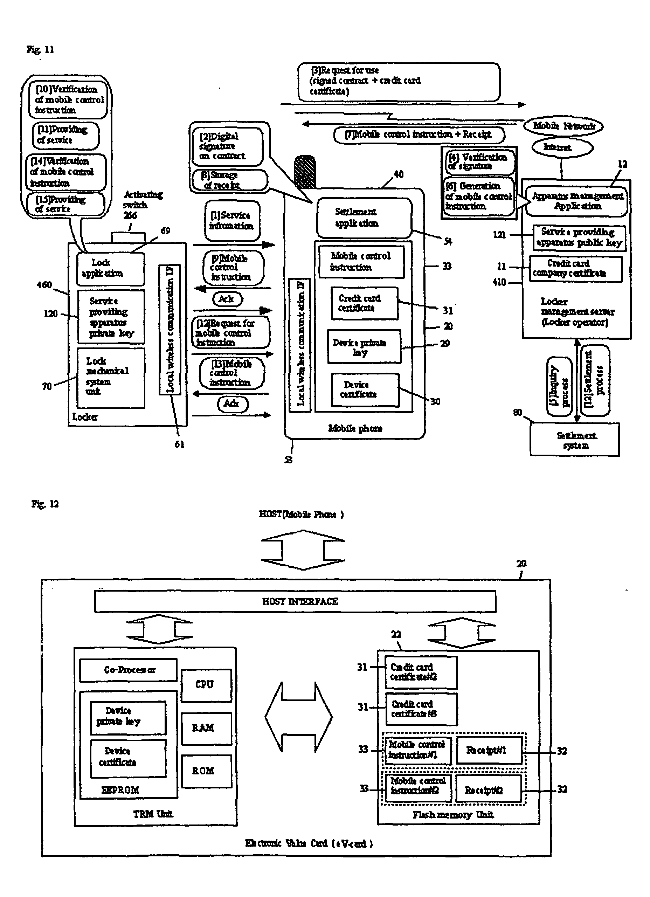

The system herein, as shown in Fig. 10, comprises an automatic vending machine 360 as a service providing apparatus. The automatic vending machine 360 comprises a local wireless communication I/F 61; an apparatus control application 63: a control unit (not described in the drawings) of a microcomputer, which controls the automatic vending machine 360 based on the apparatus control application 63; a private key 120 of a service providing apparatus, which is a private key of the automatic vending machine 360; an automatic vending machine mechanical system unit 68 as a mechanical system unit; and a product selection switch 166. Moreover, the system further comprises, as a management server, an automatic vending machine management server 310 of an automatic vending machine operator. The other configurations are not different from those of the first embodiment according to the present invention (Fig. 1).

In the automatic vending machine 360 of the system herein, when the product selection switch 166 is pressed, the apparatus control application 63 is activated. Then, the apparatus control application 63 generates a contract according to the price of the product which has been selected, and starts continuous transmission of service information ([1]).

The mobile phone 40 executes the request for use in the same manner as that of the first embodiment, receives the mobile control instruction from the automatic vending machine management server 310 and transmits it to the automatic vending machine 360 ([9]).

The apparatus control application 63 of the automatic vending machine 360 decrypts the mobile control instruction, respectively checks the service providing apparatus number and the contract number of the mobile control instruction with the service providing apparatus number of the automatic vending machine 360 and the contract number of the contract in the service information, and verifies the mobile control instruction. In cases where the verification result is in the affirmative, "Ack" is returned to the mobile phone 40, and the automatic vending machine mechanical system unit 68 is made to dispense the selected product according to the mobile control instruction.

In the automatic vending machine system, electronic settlement is used, so that there is no need for collection of money. Moreover, there is no need for a coin or bill detector in the automatic vending machine, thereby reducing its manufacturing cost. Moreover, the automatic vending machine manager can keep up with the use conditions of sales of automatic vending machines in real time, so that it is possible to accordingly supply products to the automatic vending machine. Moreover, the automatic vending machine management server can control the respective automatic vending machine having no remote communication function.

Note that also in the system herein, as in the second embodiment, a payment agency by an operator or an agent may be used.

In the sixth embodiment according to the present invention, a coin-operated locker system implemented by the present invention will be described. In the system herein, a valid time period of using a coin-operated locker is set, and a user can use the coin-operated locker repeatedly to the extent of the valid time period.

The system herein, as shown in Fig. 11, comprises a locker 460 as a service providing apparatus. The locker comprises a local wireless communication I/F 61; a lock application 69 as a device control application; a control unit (not described in the drawings) of a microcomputer, which controls the locker 460 based on the lock application 69; a private key 120 of a service providing apparatus, which is the private key of the locker 460; a lock mechanical system unit 70 as a mechanical system unit, which locks or unlocks the lock; and an activation switch 266, which is installed onto the door of the locker 460. Moreover, the system further comprises, as a management server, a locker management server 410 of a coin-operated locker operator.

Moreover, the mobile control instruction received from the locker management server 410 is stored in the electronic value card 20 with a receipt ([8]). In Fig. 12, the mobile control instruction 33 is stored in the flash memory unit 22 of the electronic value card 20, and is related to the receipt 32, which has been received at the point of acquisition of the mobile control instruction 33. The receipt 32 includes a service providing apparatus number indicating the locker 460, so that it is possible to accordingly search for the mobile control instruction corresponding to the locker 460. The other configurations are not different from those of the first embodiment according to the present invention (Fig. 1).

In the system herein of the locker 460, by touching on the door, the activation switch 266 is turned on, which activates the lock application 69. The lock application 69 carries out continuous transmission of service information ([1]) for a specific period if in the unlocked state, or carries out continuous transmission of the request for the mobile control instruction ([12]), which requests to a mobile phone to transmit a mobile control instruction for a specific period if in the locked state. The request for a mobile control instruction includes the service providing apparatus number, which identifies the locker 460.

The mobile phone 40, having received the service information ([1]) from the locker 460, transmits the mobile control instruction to the locker 460 ([9]) if the mobile control instruction corresponding to the service providing apparatus number in the contract of the service information is stored in the electronic value card 20; or executes the request for use in the same manner as that of the first embodiment, receives the mobile control instruction from the locker management server 410 and transmits it to the locker 460 ([9]) if the mobile control instruction corresponding to the service providing apparatus number in the contract of service information is not stored in the electronic value card 20. The mobile control instruction is set with the time period of use corresponding to the time period (e.g. 300 yen for 3 hour), during which the locker 460 becomes available for use by way of payment of the charge indicated on the contract of the service information.

Moreover, in cases where the request for a mobile control instruction ([12]) is received from the locker 460, the settlement application 54 of the mobile phone 40 reads the mobile control instruction corresponding to the locker 460 from mobile control instructions stored in the electronic value card 20 based on the service providing apparatus number, included in the request for a mobile control instruction, and transmits the mobile control instruction corresponding to the locker 460 to the locker 460 ([13]).

In cases where the mobile control instruction is received in the unlocked state, the lock application 69 of the locker 460 decrypts the mobile control instruction, checks the service providing apparatus number with the service providing apparatus number of the locker 460, and verifies whether or not the mobile control instruction has expired ([10]). In cases where all of the verification results are in the affirmative, "Ack" is returned to the mobile phone 40. Then, the lock mechanical system unit 70 is converted to the locked state according to the mobile control instruction, and the contract number included in the mobile control instruction is stored in the memory of a microcomputer ([11]).

In cases where the mobile control instruction is received in the locked state, the lock application 69 of the locker 460 decrypts the mobile control instruction, respectively checks the service providing apparatus number and the contract number with the service providing apparatus number of the locker 460 and the contract number stored at the point of unlocking, and verifies whether or not the mobile control instruction has expired ([14]). In cases where all of the verification results are in the affirmative, "Ack" is returned to the mobile phone 40. Then the lock mechanical system unit 70 is converted the unlocked state according to the mobile control instruction, and the contract number, which has been stored, is deleted ([15]). Later, the locker management server 410 executes the settlement process with the settlement system 80 ([16]).

Moreover, if only the verification of the valid time period of a mobile control instruction so received fails (expired), the service information ([1]), which has been newly generated, is continuously transmitted for a specified period. Meanwhile, the mobile phone 40 downloads the new mobile control instruction 33 from the locker management server 410. Here, the same number of the contract number, which has been stored in the memory of the microcomputer, is used for the contract number of the contract of the newly generated service information; and the amount of payment, including the charge for overtime, is set therein. The locker management server 410 validates the new contract among contracts having the same contract number, and later executes settlement with a charging server 80 based on the amount including the charge for overtime. Thus, according to the system herein, during the valid time period, which is set by the mobile control instruction, it is possible to repeatedly use the locker. Moreover, if it has expired, a new mobile control instruction may be downloaded.

According to the coin-operated locker system herein, a mobile control instruction, which has expired, automatically becomes void, so that there is no need of changing the lock even when the key has been lost. Therefore, it is possible to reduce operation costs of coin-operated locker systems. Moreover, in the coin-operated locker system herein, electronic settlement is used, so that there is no need to collect coins. Moreover, the locker management server can keep up with the sales conditions of coin-operated lockers in real time. Moreover, the locker management server can control respective coin-operated lockers having no remote communication function.

Note that also in the system herein, as in the second embodiment, a payment agency by an operator or an agent may be used.

In the seventh embodiment according to the present invention, a coin-operated locker system with improved security will be described.

In the system herein, the locker management server issues a digital key, which includes a device public key corresponding to the device private key 29 of the electronic value card 20 attached to the mobile phone 40, in place of the mobile control instruction. Fig. 14 illustrates the data construction of the digital key. The digital key comprises a lock ID, which specifies the lock; a digital key ID, which specifies the digital key; a device public key corresponding to the device private key 29 of the electronic value card 20 attached to the mobile phone 40; digital key supplementary information, which indicates additional information relating to the digital key such as its name, type, usage, and destination; rule information, which defines the usage rules; a valid time period of the digital key; an issuance date of the digital key; and an issuer ID, which identifies the issuer of the digital key. Moreover, a digital signature by the private key of the locker management server is given thereto. The usage rule defines whether or not the digital key is for a one-time use and whether or not the transferor's digital key is to be deleted if the digital key is transferred to another person.

Thus, the locker management server 410 certifies the device public key corresponding to the device private key 29 of the electronic value card 20, and the above digital certificate is used as a digital key.

The mobile phone makes a request for the lock to unlock by presenting the digital key to the locker. Here, the digital key, to which the digital signature by the device private key 29 of the electronic value card 20 corresponding to a random number received from the locker is attached, is presented. The locker verifies the digital key and the digital signature, and if the result of verification is in the affirmative, locking or unlocking is executed.

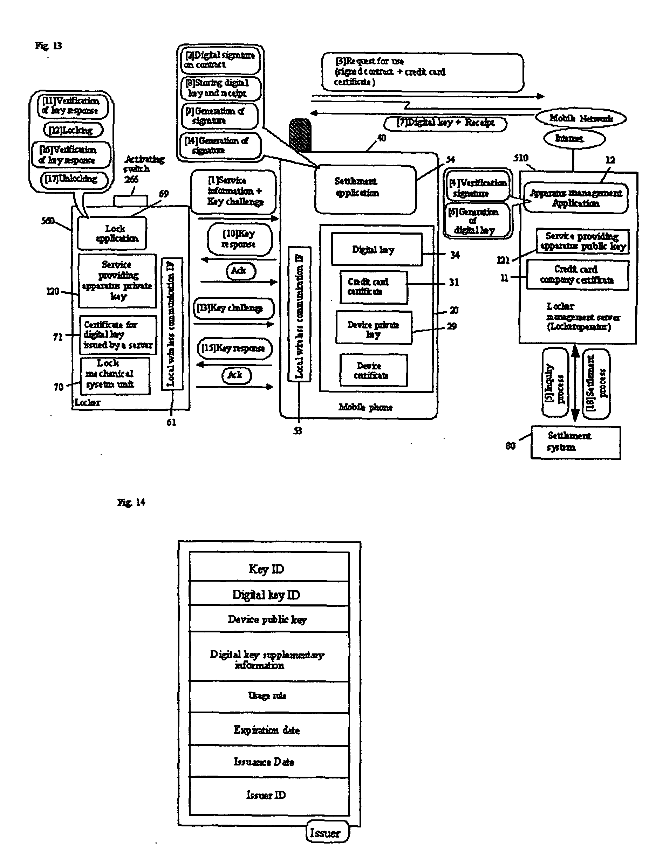

Fig. 13 illustrates a coin-operated locker system involving credit settlement for the payment for the charge of a digital key.

The system herein comprises a locker management server 510, which issues digital keys; and a locker 560 as a service providing apparatus. The locker 560 comprises a local wireless communication I/F 61; a lock application 69 as a device control application; a control unit (not described in the drawings) of a microcomputer, which controls the locker 560 based on the lock application 69; a private key 120 of a service providing apparatus, which is a private key of the locker 560; a certificate for a digital key issuing server 71, which certifies the public key of the locker management server 510, which issues the digital key; a lock mechanical system unit 70 as a mechanical system unit, which locks or unlocks the lock; and an activation switch 266, which is installed onto the door of the locker 460. Moreover, the digital key received from the locker management server 510 is stored in the electronic value card 20 with a receipt ([8]). The other configurations are not different from those of the sixth embodiment according to the present invention (Fig. 11).

In the system of the locker 560, by touching on the door, the activation switch 266 is turned on, which activates the lock application 69. The lock application 69 carries out continuous transmission of the service information and the key challenge for a specific period if in the unlocked state ([1]). The key challenge includes the lock ID, which uniquely specifies the locker 560, and a random number generated by the locker 560. Moreover, the contract of the service information includes the lock ID, specifying the locker 560 in place of the service providing apparatus number. On the other hand, in the locked state, only the key challenge is continuously transmitted for a specific period ([13]).

First, the operation for locking the lock by a digital key if the locker 560 is in the unlocked state will be described.

The mobile phone 40, having received the service information and the key challenge, activates the settlement application 54 based on the application ID indicated in the service information. If the digital key corresponding to the lock ID in the key challenge is stored in the electronic value card 20, the digital signature by the device private key 29 of the electronic value card 20 corresponding to random number in the key challenge is generated ([9]), and the key response including the digital key and the generated digital signature is transmitted to the locker 560 ([10]). If the digital key corresponding to the lock ID is stored in the electronic value card 20, the settlement application 54 starts a process of acquiring a digital key from the locker management server 510.

The mobile phone 40 displays the content of the service guidance and the contract on the LCD, and urges the user to execute the payment operation (a digital signature on the contract). When the user carries out the payment operation, the settlement application 54 executes the digital signature on the contract ([2]).

Next, the mobile phone 40 transmits the request message for use, which includes the contract with a signature and the credit card certificate 31, to the locker management server 510 ([3]).

The apparatus management application 12 of the locker management server 510, having received the request message for use, executes verification of the digital signature of the contract ([4]), carries out an inquiry process to the settlement system 80 ([5]), after which generates the digital key by using the public key in the credit card certificate 31 (the device public key) ([6]).

Moreover, the locker management server 510 makes a receipt and transmits the generated digital key and the receipt ([7]). The settlement application of the mobile phone 40 stores the digital key and the receipt in the electronic value card 20 ([8]).

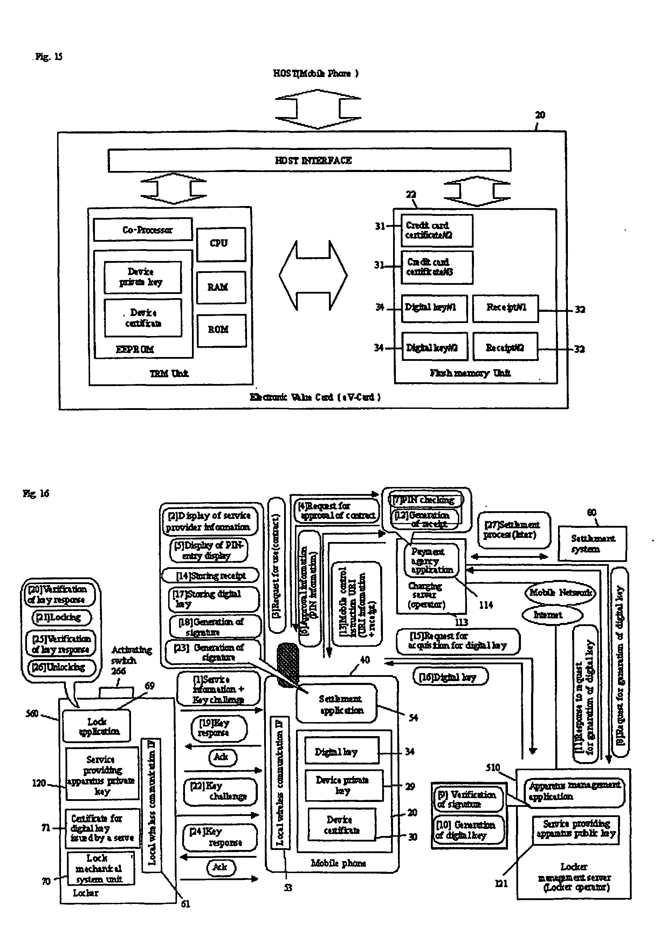

As shown in Fig. 15, in the flash memory unit 22 of the electronic value card 20, the credit card certificate 31, the receipt 32, and the digital key 34 are stored.

Next, the settlement application 54 of the mobile phone 40 generates the digital signature by the device private key 29 of the electronic value card 20 corresponding to the random number in the key challenge ([9]), and the key response including the digital key and the generated digital signature are transmitted to the locker 560 ([10]).

The lock application 69 of the locker 560, having received the key response, verifies the digital key 34 included in the key response with the digital signature. In verification of the digital key 34, the lock ID of the digital key 34 is at first checked. Next, it verifies whether or not the valid time period of the digital key 34 has expired. Moreover, the signature of the locker management server 510, which is given to the digital key 34, is verified by using the public key of the locker management server 510, which is stored as a certificate for a digital key issuing server 71, and verifies the validity of the digital key 34. Moreover, in verification of digital signature, by using the device public key included in the digital key 34, it verifies that the digital signature is generated by the electronic value card having the device private key corresponding thereto ([11]). If an error is not detected in the above verifications, the lock application 69 of the locker 560 returns "Ack" to the mobile phone 40 and causes the lock mechanical system unit 70 to convert to the locked state ([12]).

Next, the operation of unlocking the lock by a digital key if the locker 560 is in locked state will be described.

The mobile phone 40, having received the key challenge ([13]), activates the settlement application 54; searches for the digital key corresponding to the lock ID in the key challenge from the digital keys stored in the electronic value card 20; generates the digital signature by the device private key 29 of the electronic value card 20 corresponding to a random number in the key challenge ([14]); and transmits the key response including the searched digital key and the generated digital signature to the locker 560 ([15]).

The lock application 69 of the locker 560, having received the key response, verifies the digital key-34 and the digital signature, which are included in the key response, as in the case of locking ([16]). If an error is not detected in the above verifications, the lock application 69 of the locker 560 returns "Ack" to the mobile phone 40 and causes the lock mechanical system unit 70 to convert to the unlocked state ([17]).

Later, the locker management server 510 executes the settlement process with the settlement system 80 ([18]).

Moreover, in the verification of the digital key 34 and the digital signature, which are included in the key response, if only the verification of valid time period of the digital key 34 fails (expires), the lock application 69 of the locker 560 continuously transmits service information, which has been newly generated, and the key challenge for a specific period ([1]). Meanwhile, the mobile phone 40 downloads the new digital key from the locker management server 510. Here, the amount of payment including the additional charge for overtime is set into the updated contract of the service information. Later, the locker management server 510 executes the settlement with the settlement system 80 based on the amount of payment including the additional charge for overtime.

Thus, according to the coin-operated locker system herein, the digital signature of the key response corresponding to the key challenge is verified, and the digital signature cannot be generated without the electronic value card 20 corresponding to the digital key. Therefore, even if someone can intercept the digital key, he cannot use the digital key without the electronic value card 20 corresponding to the digital key, thereby improving security compared to that of the system of the sixth embodiment according to the present invention.

Below is described the eighth embodiment according to the present invention, which is a coin-operated locker system using a digital key for carrying out settlement by a payment agency in lieu of credit settlement of the seventh embodiment according to the present invention.

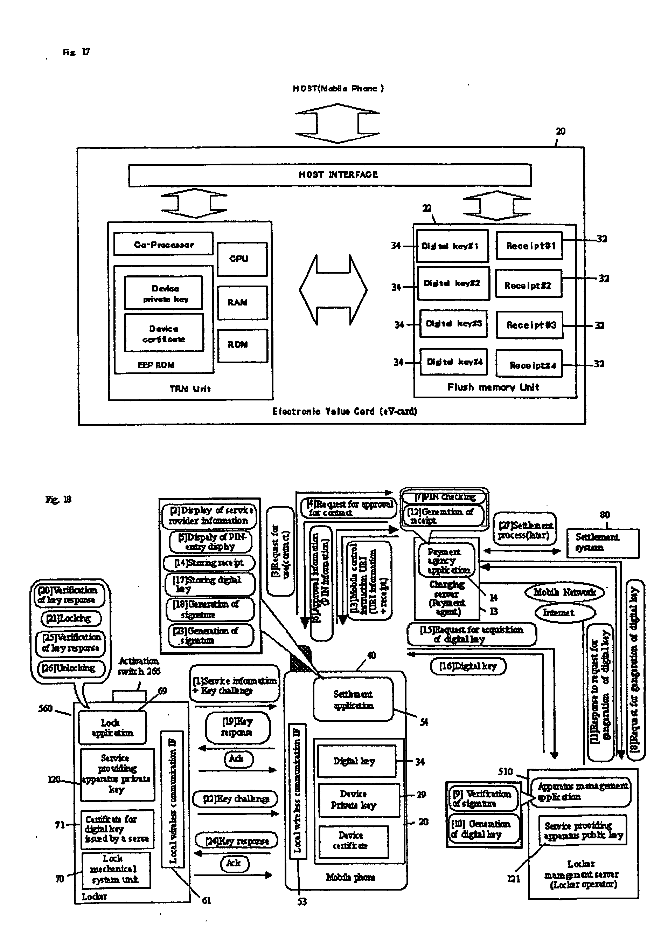

Moreover, Fig. 16 illustrates a system of a payment agency carried out by a charging server 13 operated by an operator of a mobile phone. The charging server 13 comprises a payment agency application 14. The settlement system 80 carries out settlement processes with the charging server 13. Moreover, the electronic value card 20 stored in the mobile phone 40 may or may not store the credit card certificate. The other configurations and the operations of the locker 560 are not different from those of the seventh embodiment according to the present invention (Fig. 13).

In the charging server 13 operated by an operator, a PIN (Personal Identification Number) corresponding to the terminal number of the mobile phone 40 is pre-registered.

First, below is described the operation of locking by a digital key if the locker 560 is in unlocked state.

The mobile phone 40, having received the service information and the key challenge, activates the settlement application 54 based on the application ID indicated in the service information. If the digital key corresponding to the lock ID in the key challenge is stored in the electronic value card 20, the digital signature by the device private key 29 of the electronic value card 20 corresponding to a random number in the key challenge is generated ([8]), and the key response including the digital key and the generated digital signature are transmitted to the locker 560 ([9]). The subsequent processes between the mobile phone 40 and the locker 510 are the same as those of the seventh embodiment according to the present invention.

If the digital key corresponding to the lock ID is stored in the electronic value card 20, the settlement application 54 starts the process of acquiring a digital key from the locker management server 510.

The content of the service guidance and the contract are displayed on the LCD, and the user is urged to confirm the operation of the request for use ([2]). When the user confirms the operation, the settlement application 54 transmits a request message for use, which includes a contract, from the wireless communication unit 42 to the charging server 13, which is indicated by the destination URI included in the service information ([3]).

The payment agency application 14 of the charging server 13 transmits the request for approval of the contract for confirming the user's contractual intent by way of user authentication ([4]). The settlement application 54 of the mobile phone 40, having received the request for the approval of the contract, displays the PIN-entry display and urges the user to input the PIN ([5]). When the user inputs the PIN, the settlement application 54 of the mobile phone 40 transmits the inputted PIN number and the device certificate 30 of the electronic value card 20 to the charging server 13 as approval information ([6]). The payment agency application 14 of the charging server 13 checks the PIN with the PIN registered corresponding to the terminal number of the mobile phone 40 ([7]), if they are identical, the request for generation of a digital key, which requests the locker management server to generate a digital key, is transmitted to the locker management server 510 ([8]). The request for generation of a digital key includes a contract received by the charging server 13 as a request message for use via the mobile phone 40, and device certificate 30 of the electronic value card 20. The apparatus management application 12 of the locker management server 510 searches for the public key of a service providing apparatus based on the service providing apparatus number of the contract, and verifies the digital signature on the contract given by the service providing apparatus by using the retrieved public key of a service providing apparatus ([9]). If the result of the above verification is in the affirmative, the apparatus management application of the locker management server 510 generates a digital key by using the public key in the device certificate 30 (device public key), and assigns a unique URI thereto ([10]). Then, a response message to the request for generation of a digital key, which includes URI information of the mobile control instruction, is transmitted to the charging server. Moreover, if an error is detected in the verification of the digital signature of the contract, a response message to the request for generation of a digital key, which indicates the error, is transmitted to the charging server ([11]).

The charging server 13, having received the response message to the request for generation of a digital key including the URI information of the digital key, generates a receipt as payment history information for a user based on the content of the contract ([12]), and transmits it with the URI information of the digital key as a digital key URI message to the mobile phone 40 ([13]). After receiving the above information, the settlement application 54 of the mobile phone 40 stores the receipt into the flash memory unit 22 of the electronic value card 20 ([14]), transmits the request for acquisition of a digital key to the locker management server 510, and requests the digital key indicated by the URI information of the digital key ([15]). The locker management server 510 transmits the digital key 34 to the mobile phone 40 ([16]). The settlement application 54 of the mobile phone 40 stores the digital key 34 in the flash memory unit 22 of the electronic value card 20 ([17]).

As shown in Fig. 17, in the flash memory unit 22 of the electronic value card 20, the receipt 32 and the digital key 34 are stored.

Next, the settlement application 54 of the mobile phone 40 generates the digital signature by the device private key 29 of the electronic value card 20 corresponding to a random number in the key challenge ([18]), and the key response including the digital key and the generated digital signature are transmitted to the locker 560 ([19]). The subsequent processes between the mobile phone 40 and the locker 510 are the same as those of the seventh embodiment according to the present invention.

The operation of unlocking the lock by a digital key, if the locker 560 is in the locked state, is the same as that of the seventh embodiment according to the present invention.

Thus, according to the system herein, an operator authenticates a user by using a terminal number and a PIN, and collects the charge for the use of the locker 560 along with the communication charge.

Moreover, Fig. 18 illustrates a system of a payment agency carried out by the charging server 113 of a payment agent. The PIN, corresponding to the member's ID is pre-registered in the charging server 113. In this case, the settlement application 54 of the mobile phone 40, having received the request for the approval of the contract, urges the user to input the member's ID and the PIN. When the user inputs the member's ID and the PIN, the settlement application 54 of the mobile phone 40 transmits the member's ID and the PIN as the approval information to the charging server 113. The payment agency application 114 of the charging server 113 authenticates the user by using the member's ID and the PIN. The other configurations are the same as those of Fig. 17.

According to the system herein, a payment agent authenticates a user by using a terminal number and a PIN, and collects the charge for the use of the locker 560 along with the communication charge.

As in the case for the seventh embodiment according to the present invention, by using a digital key, it is possible to improve security compared to that of the system of the sixth embodiment according to the present invention.

As described above, the system according to the present invention enables execution settlement processes via a network for the services provided by a service providing apparatus having no network communication function, and also allows control of the service providing apparatus by transmitting mobile control instructions from the server to the service providing apparatus via a mobile phone, etc. of an user.

Therefore, there is no need for inserting or collecting money. There is no need for coin or bill detectors, thereby reducing manufacturing costs.

Moreover, the management server can control respective service providing apparatuses without establishing a network with the respective service providing apparatuses and can keep up with the conditions of service providing apparatuses in real time.

Therefore, the present invention can be widely used in automatic vending machines, coin-operated locker systems, parking meters, automatic parking lot apparatuses, etc.

## Claims

1. A mobile settlement system, which comprises a mobile communication device performing via a network a settlement process for a service received from a service providing apparatus, wherein said mobile communication device receives control information of a management server via a network, which causes said service providing apparatus to perform said service, and transfer said control information to said service providing apparatus.

2. The mobile settlement system according to Claim 1, wherein said mobile communication device receives contract information of said service from said service providing apparatus via local wireless communication, and transmits said control information to said service providing apparatus via said local wireless communication.

3. The mobile settlement system according to Claim 2, wherein said mobile communication device transmits to said management server via a network said contract information, to which a digital signature is given by using a device private key of an electronic value card, and a certificate for certifying a device public key corresponding to said device private key; and said management server verifies said digital signature by using said device public key of said certificate, transmits said control information to said mobile communication device if the result of said verification is in the affirmative, and performs a settlement process with a settlement system.

4. The mobile settlement system according to Claim 2, wherein said mobile communication device transmits said contract information to a charging server via a network; said charging server performs a settlement process between a settlement system after authenticating an user by using PIN information received from said mobile communication device; and said management server transmits said control information to said mobile communication device according to the authentication result of said charging server.

5. The mobile settlement system according to any one of Claims 1 to 4, wherein said service providing apparatus is a parking meter, which displays a paid-in-full status only for a period specified by said control information received via said mobile communication device.

6. The mobile settlement system according to any one of Claims 1 to 4, wherein said service providing apparatus is a parking lot apparatus, which restricts an automobile from existing from the parking lot detecting said automobile, and releases said restriction when said control information is received via said mobile communication device.

7. The mobile settlement system according to any one of Claims 1 to 4, wherein said service providing apparatus is an automatic vending machine, which dispenses a selected product upon receiving said control information via said mobile communication device after said product is selected-by a product selection switch.

8. The mobile settlement system according to any one of Claims 1 to 4, wherein said service providing apparatus is a locker, which locks a lock upon receiving said control information from said mobile communication device if the lock is in an unlocked state at activation, and which unlocks the lock upon receiving said control information from said mobile communication device if the lock is in a locked state at activation.

9. The mobile settlement system according to Claim 8, wherein said management server issues a digital key as said control information, to which a digital signature from said management server is attached; said mobile communication device attaches a digital signature of a device private key of an electronic value card to said digital key received from said management server and transmits said digital key to said locker; and said locker authorizes said digital key and said mobile communication device according to said digital signature.

10. A mobile communication device comprising: a storage means for storing an electronic value card; a first communication means for performing wireless communication via a network; a second communication means for performing wireless communication via local wireless communication, which receives contract information of a service provided by a service providing apparatus via said second communication means; performs a settlement process for receiving said service via said first communication means; receives control information for causing said service providing apparatus to perform said service; and transmits said control information to said service providing apparatus via said second communication means.

11. The mobile communication device according to Claim 10, which executes a digital signature to said contract information by using said device private key of said electronic value card; and transmits, to an address included in said contract information, contract information with said executed digital signature, and a credit card certificate including a device public key as a public key corresponding to said device private key.

12. The mobile communication device according to Claim 10, which transmits said contract information, and PIN information for personal identification to an address of a charging server included in said contract information via said first communication means.

13. The mobile communication device according to any one of Claims 10 to 12, which stores said control information received via said first communication means into said electronic value card, and transmits said control information to said service providing apparatus via said second communication means in response to a request of said service providing apparatus.

14. An electronic value card, which stores a device private key and a corresponding device public key in a tamper-resistant memory area; stores identification information for identifying a credit card, and a credit card certificate for certifying said device public key in a non-tamper-resistant area; executes a digital signature to the received contract information by using said device private key; and outputs the contract information with said credit card certificate.

15. An electronic value card, which stores a device private key, and a corresponding device public key into a tamper-resistant memory area; stores the received control information into a non-tamper-resistant area; and executes a digital signature by using said device private key.

16. A management server for managing a service providing apparatus, which transmits, via network, control information for causing said service providing apparatus to execute said service to a mobile communication device receiving a service provided by said service providing apparatus.

17. The management server according to Claim 16, which verifies a digital signature attached to said contract information upon receiving, from said mobile communication device via network, contract information of a service provided by said service providing apparatus; transmits said control information to said mobile communication device if the result of verification is in the affirmative; and executes a settlement process with a settlement system.

18. The management server according to Claim 16, which transmits said control information to said mobile communication device authenticated by a charging server.

19. A service providing apparatus managed by a management server, which comprises a local wireless communication means, a mechanism means for executing a service, and a control means for controlling operation of said service providing apparatus, wherein said control means controls said mechanism means according to said control information upon receiving the control information of said management server from a mobile communication device making a request for said service via said local wireless communication means.

20. The service providing apparatus according to Claim 19, wherein said control means verifies a digital signature attached to said control information, and controls said mechanism means if the result of verification is in the affirmative.

21. The service providing apparatus according to Claim 19, wherein said control means transmits service information via said local wireless communication means, and said service information includes contract information of said service and a network address of said management server.

22. The service providing apparatus according to Claim 19, wherein said control means transmits service information via said local wireless communication means, -and said service information includes contract information of said service, and a network address of a charging server for carrying out a charging process for the service.

23. The service providing apparatus according to any one of Claims 19 to 22, which is a parking meter comprising, as said mechanism means, an automobile sensor for detecting an automobile, and a display means, wherein said control means causes said display means to display a paid-in-full status only for the time period designated by said control information upon receiving the control information of said management server from said mobile communication device via said local wireless communication means.

24. The service providing apparatus according to any one of Claims 19 to 22, which is a parking lot apparatus comprising, as said mechanism means, an automobile sensor for detecting an automobile, a restriction means for restricting the automobile from existing from the parking lot, and a payment switch which is pressed for payment, wherein said control means releases the restriction of said restriction means upon receiving the control information of said management server from said mobile communication device via said local wireless communication means.

25. The service providing apparatus according to any one of Claim 23 or 24, which continuously transmits said service information for a certain period of time by using said local wireless communication means upon detecting an automobile by said automobile sensor.

26. The service providing apparatus according to any one of Claims 19 to 22, which is an automatic vending machine comprising, as said mechanism means, a product selection switch, and a mechanism means of an automatic vending machine for dispensing a product, wherein said control means causes dispensing of the product selected by said product selection switch from said mechanism means of the automatic vending machine upon receiving the control information of said management server from said mobile communication device via said local wireless communication means.

27. The service providing apparatus according to Claim 26, which continuously transmits said service information for a certain period of time by using said local wireless communication means upon pressing said product selection switch.

28. The service providing apparatus according to any one of Claims 19 to 22, which is a locker comprising, as said mechanism means, a lock mechanism means for locking or unlocking a lock, and an activation switch activated by a touch on the door of the locker, wherein said control means causes said lock mechanism means to lock if the lock is in the unlocked state when said activation switch is turned on, or causes said lock mechanism means to unlock if the lock is in the locked state when said activation switch is turned on, upon receiving the control information of said management server from said mobile communication device via said local wireless communication means.

29. The service providing apparatus according to Claim 28, which continuously transmits service information for a certain period of time using said local wireless communication means when said activation switch is turned on.

30. The service providing apparatus according to Claim 28, which verifies identification information of said received control information with identification information of said control information received upon locking the lock, and causes said lock mechanism means to lock if said identification information are identical.

31. The service providing apparatus according to Claim 30, which continuously transmits said service information for a certain period of time by using said local wireless communication means if the verification of the valid time period of said control information only is in error on account of its expiration during the process for verifying validity of said received control information.
